(19) **Europäisches Patentamt / European Patent Office / Office européen des brevets**

(11) **EP 3 260 345 B1**

(12) **EUROPEAN PATENT SPECIFICATION**

(45) Date of publication and mention of the grant of the patent:
**23.06.2021 Bulletin 2021/25**

(21) Application number: **17152794.8**

(22) Date of filing: **24.01.2017**

(51) Int Cl.:
*G07C 5/08* (2006.01)    *B60W 40/09* (2012.01)
*B62K 11/00* (2006.01)    *B60L 3/08* (2006.01)
*G05D 1/00* (2006.01)    *G05D 1/08* (2006.01)

(54) **METHOD AND DEVICE FOR SAFETY DRIVING**

VERFAHREN UND VORRICHTUNG FÜR SICHERHEITSANTRIEB

PROCÉDÉ ET DISPOSITIF DE CONDUITE DE SÉCURITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2016 CN 201610465407**

(43) Date of publication of application:
**27.12.2017 Bulletin 2017/52**

(73) Proprietor: **Beijing Xiaomi Mobile Software Co., Ltd.**
**Beijing 100085 (CN)**

(72) Inventors:
- **XIE, Yan**
 **Beijing, 100085 (CN)**
- **REN, Tian**
 **Beijing, 100085 (CN)**
- **CHENG, Yue**
 **Beijing, 100085 (CN)**

(74) Representative: **DehnsGermany Partnerschaft von Patentanwälten**
**Postfach 33 04 29**
**80064 München (DE)**

(56) References cited:
**EP-A1- 2 821 977**     **CN-A- 104 503 671**
**US-A1- 2014 326 525**

- **Xiaomi: "Ninebot Mini Scooter Content", , 31 December 2015 (2015-12-31), XP055389571, Retrieved from the Internet: URL:http://files.xiaomi-mi.com/files/Ninebot_Mini/Ninebot_Mini_Instr-EN.pdf [retrieved on 2017-07-10]**
- **AuthenTech - Ben Schmanke: "Ninebot Mini, Self Balancing Hands-free Segway, "Hoverboard 2.0!" REVIEW", youtube, 5 February 2016 (2016-02-05), page 1 pp., XP054977537, Retrieved from the Internet: URL:https://www.youtube.com/watch?v=HEDQix onhcY [retrieved on 2017-07-12]**

## Description

### TECHNICAL FIELD

The present invention relates to the technical field of smart self-balancing vehicle, and more particularly, to a method and a device for safety driving (i.e., riding).

### BACKGROUND

A smart self-balancing vehicle (or smart self-balancing bike) is also known as Sensor Controlled Vehicle (SCV), Segway, or the like. Currently, commercial available smart self-balancing vehicles mainly include a double wheeled type and a unicycle type. The smart self-balancing vehicle is operated mainly based on a so called basic principle of "dynamic stabilization", and it may keep the system balanced by detecting change of the attitude of the vehicle using a gyroscope and an acceleration sensor that are built-in and driving a motor to perform corresponding adjustment using a servo control system.

In the related art, for the safety of the rider, several deigns, such as limiting a top speed of the smart self-balancing vehicle, are made in the smart self-balancing vehicle. However, each rider may have different riding experience, and thus it is difficult to formulate a unified scheme for protecting the riders.

Xiaomi:"Ninebot Mini Scooter Content" discloses that a Ninebot Moni Scooter is configured to limit the speed of the scooter to 10 km/h in a beginner mode. After reaching 1 km of riding, the beginner mode is automatically disabled and the speed limit is automatically removed. AuthenTech - Ben Schmanke: "Ninebot Moni, Self Balancing Hands-free Segway, "Hoverboard 2.0!" REVIEW" discloses that the Ninebot Moni Scooter is equipped with means to track its mileage. The vehicle's speed is limited to 10 km/h during the first kilometer of riding, after which the beginner mode is disabled and the vehicle speed limit is unblocked.

CN 104 503 671 A discloses a driving control device for a self-balancing vehicle. The driving control device is configured to acquiring the current user information, wherein said current user information comprises historical driving information such as the total riding time and the number of accidents. Based on said current user information, the driving control device automatically sets the corresponding driving mode, wherein said driving mode comprises a specific maximum acceleration.

US 2014/326525 A1 discloses a system in which a self-balancing vehicle is connected to a smartphone running an app. Said smartphone receives riding data from the self-balancing vehicle and processes the received data. The smartphone is also configured to program the self-balancing vehicle. Furthermore, the smartphone comprises a GUI enabling the user to select his level, to which a maximum acceleration of the vehicle is associated.

## SUMMARY

Accordingly, the present invention provides a method and a device for safety driving, in accordance with the independent claims.

According to a first aspect of the present invention, there is provided a method for safety driving according to claim 1.

According to the invention, the riding data includes the riding time or the riding distance, the comparing the riding data with riding data corresponding to a preset user level may include:

acquiring a riding time range or a riding distance range corresponding to the preset user level, respectively; and
determining a riding time range or a riding distance range in which the riding time or the riding distance of the current user of the self-balancing vehicle fall, and
the determining a user level of the current user of the self-balancing vehicle according to a result of the comparing may include:
determining the user level of the current user of the self-balancing vehicle according to the riding time range or the riding distance range in which the riding time or the riding distance of the current user of the self-balancing vehicle fall.

According to the invention, the riding data includes the shaking frequency, the shaking arc magnitude and the shaking time, the comparing the riding data with riding data corresponding to a preset user level may include:

acquiring a shaking frequency range, a shaking arc magnitude range, and a shaking time range corresponding to the preset user level, respectively; and
determining a shaking frequency range, a shaking arc magnitude range and a shaking time range in which the shaking frequency, the shaking arc magnitude and the shaking time of the current user of the self-balancing vehicle fall, and
the determining a user level of the current user of the self-balancing vehicle according to a result of the comparing may include:
determining the user level of the current user of the self-balancing vehicle according to the shaking frequency range, the shaking arc magnitude range and the shaking time range in which the current user of the self-balancing vehicle fall.

According to the invention, the method further includes determining the user level of the current user of the self-balancing vehicle as the user level determined according to the shaking frequency, the shaking arc magnitude and the shaking time of the current user of the self-balancing vehicle.

In one unclaimed embodiment, the method may further include: displaying the user level of the current user of the self-balancing vehicle.

In one embodiment, the method may further include:

> determining whether the user level of the current user of the self-balancing vehicle has changed; and
> if the user level is changed, adjusting current startup acceleration of the self-balancing vehicle to be the startup acceleration corresponding to the changed user level,

comparing the changed user level with the user level before the change;

> if the user level is demoted, lowering the startup acceleration of the self-balancing vehicle corresponding to the user level before the change; and
> if the user level is promoted, raising the startup acceleration of the self-balancing vehicle corresponding to the changed user level.

According to a second aspect of the present invention, there is provided a device for safety driving according to claim 4.

According to the invention, the riding data includes the riding time or the riding distance, the comparing module may include:

> a first acquiring sub module configured to acquire a riding time range or a riding distance range corresponding to the preset user level, respectively; and
> a first determining sub module configured to determine a riding time range or a riding distance range in which the riding time or the riding distance of the current user of the self-balancing vehicle fall, and
> the first determining module may include:
> a second determining sub module configured to determine the user level of the current user of the self-balancing vehicle according to the riding time range or the riding distance range in which the riding time or the riding distance of the current user of the self-balancing vehicle fall.

According to the invention, the riding data further includes the shaking frequency, the shaking arc magnitude and the shaking time, the comparing module may include:

> a second acquiring sub module configured to acquire a shaking frequency range, a shaking arc magnitude range, and a shaking time range corresponding to the preset user level, respectively; and
> a third determining sub module configured to determine a shaking frequency range, a shaking arc magnitude range and a shaking time range in which the shaking frequency, the shaking arc magnitude and the shaking time of the current user of the self-balancing vehicle fall, and
the first determining module may include:
a fourth determining sub module configured to determine the user level of the current user of the self-balancing vehicle according to the shaking frequency range, the shaking arc magnitude range and the shaking time range in which the current user of the self-balancing vehicle fall.

The device further includes a second determining module configured to determine the user level of the current user of the self-balancing vehicle as the user level determined according to the shaking frequency, the shaking arc magnitude and the shaking time of the current user of the self-balancing vehicle.

In one unclaimed embodiment, the device may further include: a display module configured to display the user level of the current user of the self-balancing vehicle.

According to the invention, the device further includes:
a third determining module configured to determine a startup acceleration of the self-balancing vehicle according to the user level of the current user of the self-balancing vehicle.

According to the invention, the third determining module includes:

> a storage sub module configured to preset the startup acceleration of the self-balancing vehicle for each user level and store a correspondence between the user level and the startup acceleration corresponding to the user level; and
> a fifth determining sub module configured to determine the startup acceleration corresponding to the user level of the current user of the self-balancing vehicle from the stored correspondence.

In one embodiment, the device may further include:

> a fourth determining module configured to determine whether the user level of the current user of the self-balancing vehicle has changed; and
> a adjusting module configured to adjust current startup acceleration of the self-balancing vehicle to be the startup acceleration corresponding to the changed user level if the user level is changed,
> a comparison module configured to compare the changed user level with the user level before the change;
> a locking module configured to lower the startup acceleration of the self-balancing vehicle corresponding to the user level before the change if the user level is demoted; and
> an unlocking module configured to raise the startup acceleration of the self-balancing vehicle corresponding to the changed user level if the user level is promoted.

According to the invention, the steps of the control method for safety driving are determined by computer program instructions.

Consequently, according to a third aspect, the invention is also directed to a computer program for executing the steps of a method for safety driving as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in embodiments of the present invention may have the following beneficial effects.

According to the above technical solutions, riding data of a current user of a self-balancing vehicle is acquired, the riding data is compared with riding data corresponding to a preset user level, and a user level of the current user of the self-balancing vehicle is determined according to a result of the comparing. Accordingly, after the rider has acknowledged his/her own level, the rider may be reminded to adjust the speed, the acceleration, etc., of the self-balancing vehicle according to his/her own level, so as to keep the rider safe.

## BRIEF DESCRIPTION OF THE DRAWINGS

The accompanying drawings, which are incorporated in and constitute a part of this specification, illustrate embodiments consistent with the present invention and, together with the description, serve to explain the principles of the present invention.

Fig. 1 is a flow chart illustrating a method for safety driving, according to an exemplary embodiment.
Fig. 2 is a flow chart illustrating another method for safety driving, according to an exemplary embodiment.
Fig. 3 is a flow chart illustrating another method for safety driving, according to an exemplary embodiment.
Fig. 4 is a flow chart illustrating another method for safety driving, according to an exemplary embodiment.
Fig. 5 is a flow chart illustrating further another method for safety driving, according to an exemplary embodiment.
Fig. 6 is a flow chart illustrating the step S105 in a method for safety driving, according to an exemplary embodiment.

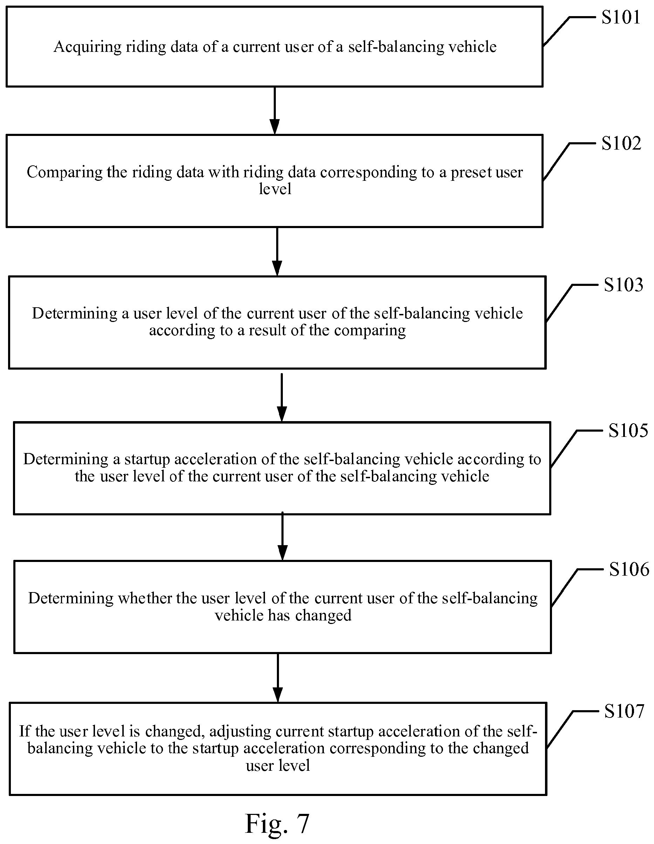

Fig. 7 is a flow chart illustrating another method for safety driving, according to an exemplary embodiment.
Fig. 8 is a flow chart illustrating another method for safety driving, according to an exemplary embodiment.
Fig. 9 is a block diagram of a device for safety driving, according to an exemplary embodiment.
Fig. 10 is a block diagram of another device for safety driving, according to an exemplary embodiment.
Fig. 11 is a block diagram of another device for safety driving, according to an exemplary embodiment.
Fig. 12 is a block diagram of further another device for safety driving, according to an exemplary embodiment.

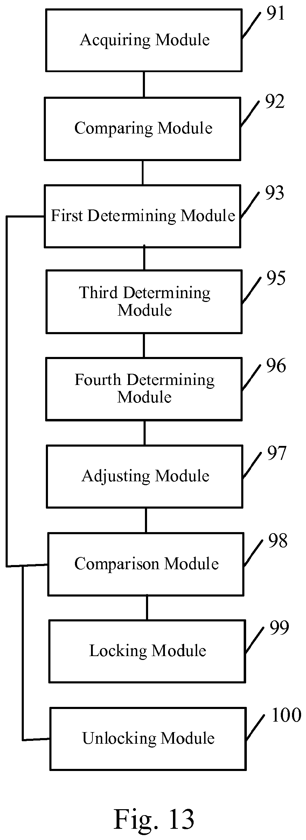

Fig. 13 is a block diagram of still another device for safety driving, according to an exemplary embodiment.
Fig. 14 is a block diagram of a device applicable for safety driving, according to an exemplary embodiment.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

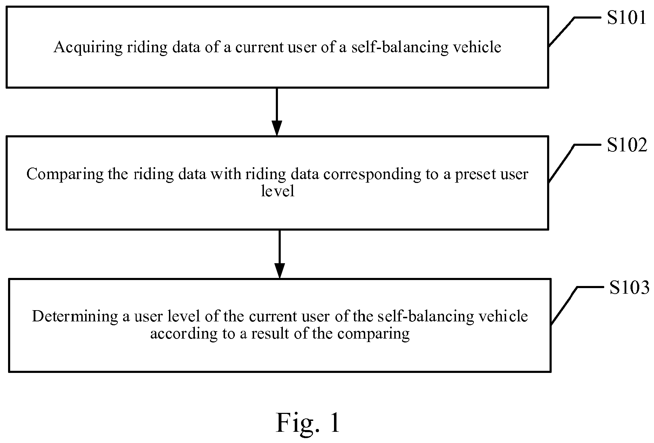

Fig. 1 is the flow chart of a method for safety driving, according to an exemplary embodiment. Referring to FIG. 1, the method includes the following steps S101-S103.

In step S101, riding data of a current user of a self-balancing vehicle is acquired.

In step S102, the riding data is compared with riding data corresponding to a preset user level.

In step S103, a user level of the current user of the self-balancing vehicle is determined according to a result of the comparing.

According to the above method of the present invention, riding data of a current user of a self-balancing vehicle is acquired, the riding data is compared with riding data corresponding to a preset user level, and a user level of the current user of the self-balancing vehicle is determined according to a result of the comparing. Accordingly, after the acknowledging the rider's user level, the rider may be reminded to adjust the speed, the acceleration, etc., of the self-balancing vehicle according to his/her own level, so as to keep the rider safe.

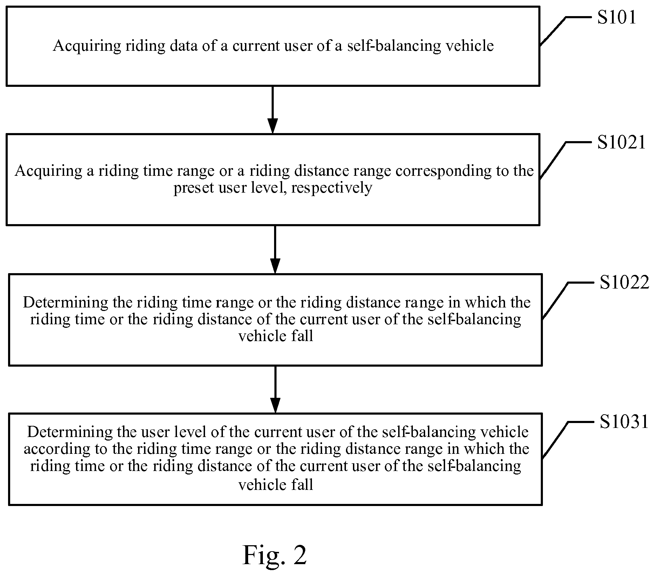

The riding data includes the riding time or the riding distance. As illustrated in Fig. 2, the step S102 may be implemented as the following steps S1021-S1022.

In step S1021, a riding time range or a riding distance range corresponding to the preset user level are acquired respectively.

In step S1022, the riding time range or the riding distance range in which the riding time or the riding distance of the current user of the self-balancing vehicle fall is determined.

At this time, the step S103 may be implemented as the following step S1031.

In step S1031, the user level of the current user of the self-balancing vehicle is determined according to the riding time range or the riding distance range in which the riding time or the riding distance of the current user of the self-balancing vehicle fall.

The user level may be set according to the riding time or the riding distance of the user.

For example, the user level is set according to the riding time.

If the user is beginning to use the self-balancing vehicle (the riding time is 0-30 hours, which may be set according to actual situation), the user is determined as a beginner.

If the user has used the self-balancing vehicle for 30-80 hours, the user is determined as a primary user.

If the user has used the self-balancing vehicle for 80-200 hours, the user is determined as an intermediate user.

If the user has used the self-balancing vehicle for over 200 hours, the user is determined as an advanced user.

The user level is set according to the riding distance.

If the user has ridden the self-balancing vehicle for 0-20 km (the distance may be changed according to actual situation), the user is determined as a beginner.

If the user has ridden the self-balancing vehicle for 20-60 km, the user is determined as a primary user.

If the user has ridden the self-balancing vehicle for 60-200 km, the user is determined as an intermediate user.

If the user has ridden the self-balancing vehicle for over 200 km, the user is determined as an advanced user.

For example, if the riding time of a user is 50 hours, the user is determined as a primary user. In the present embodiment, by determining the user level using the riding time or riding distance, the user level may be determined simply and quickly.

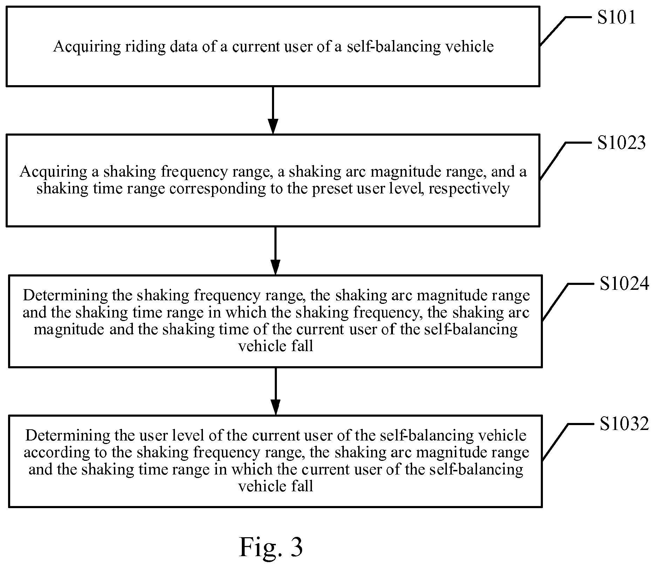

The riding data further includes the shaking frequency, the shaking arc magnitude and the shaking time. As illustrated in Fig. 3, the step S102 may be further implemented as the following steps S1023-S1024.

In step S1023, a shaking frequency range, a shaking arc magnitude range, and a shaking time range corresponding to the preset user level are acquired respectively.

In step S1024, the shaking frequency range, the shaking arc magnitude range and the shaking time range in which the shaking frequency, the shaking arc magnitude and the shaking time of the current user of the self-balancing vehicle fall are determined.

At this time, the step S103 may be further implemented as the following step S1032.

In step S1032, the user level of the current user of the self-balancing vehicle is determined according to the shaking frequency range, the shaking arc magnitude range and the shaking time range in which the current user of the self-balancing vehicle fall.

The user level may also be set according to cycling proficiency of the user of the self-balancing vehicle. The self-balancing vehicle is provided with a gradienter, and the user level may be judged according to the shaking frequency, shaking arc magnitude and the shaking time.

The shaking frequency range, the shaking arc magnitude range, and the shaking time range corresponding to the preset user level may be preset. For example, when the user level is beginner, the shaking time range may be set as 20 seconds to 50 seconds, the shaking frequency range may be set as 1 time per second to two times per second, and the shaking arc magnitude range may be set as 15 degrees to 30 degrees. When the riding data of the user falls in these ranges, the user level is determined as beginner.

For example, if the user shakes 20 times (the number may be set according to actual requirement) during 30 seconds riding of the self-balancing vehicle, and each shake reaches an arc magnitude of 20 degrees, the user is determined as a beginner.

If the user shakes two or three times during 1 minute riding of the self-balancing vehicle, and each shake reaches an arc magnitude of 10 degrees, the user is determined as a primary user.

If the user shakes slightly during the riding of the self-balancing vehicle, the user is determined as an intermediate user.

If no repeated sudden shake occurs during the riding of the self-balancing vehicle for a certain period of time, the user is determined as an advanced user.

In one embodiment, the above method may further include a step A.

In the step A, the user level of the current user of the self-balancing vehicle is determined according to the user level determined according to the shaking frequency, the shaking arc magnitude and the shaking time of the current user of the self-balancing vehicle.

The user level of the current user of the self-balancing vehicle is determined directly according to the shaking frequency, the shaking arc magnitude and the shaking time, regardless of the data such as the riding distance and the riding time. that is, the judgment condition of determining the user level according to the shaking frequency, the shaking arc magnitude and the shaking time has the highest priority. For example, if the user has a frequently shaking and large shaking angle, the user level is determined directly regardless of the riding time and the riding distance of the user.

The shaking frequency, the shaking arc magnitude and the shaking time may represent to some extent the cycling proficiency of the user, and although it is more complex to determine the user level according to the cycling proficiency of the user than to determine the user level according to the riding time or riding distance, the determined user level is more accurate.

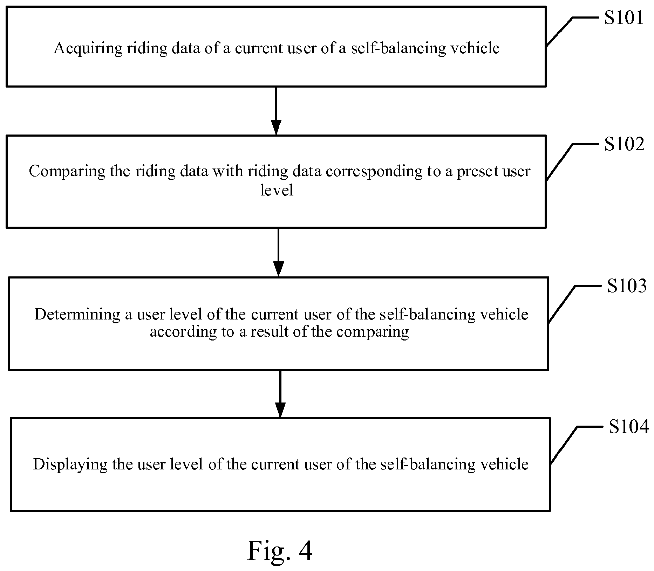

In an unclaimed embodiment, as illustrated in Fig. 4, the above method may further include step S104.

In step S104, the user level of the current user of the self-balancing vehicle may be displayed.

The user may acknowledge the user by other means. Alternatively, the user level may be displayed to the user on a screen, such that the user may have a more intuitive acknowledgement.

According to the invention, a startup acceleration of the self-balancing vehicle is determined according to the user level of the current user of the self-balancing vehicle.

The startup acceleration refers to, for example, in the case where a vehicle takes 8 seconds to accelerate from 0 to 100 km/h (0-100 km/h) during its startup, the startup acceleration "a" of the vehicle is represented as follow.

$$a=(V_{end}-V_{start})/t$$

The startup acceleration "a" of the vehicle is calculated as 3.47 m/s$^2$.

The self-balancing vehicle has more critical dangerous degree during its start than during its cruising. In the present embodiment, speed-limiting protection is performed during the startup of the self-balancing vehicle according to the user level, thereby lowering the risk of getting hurt.

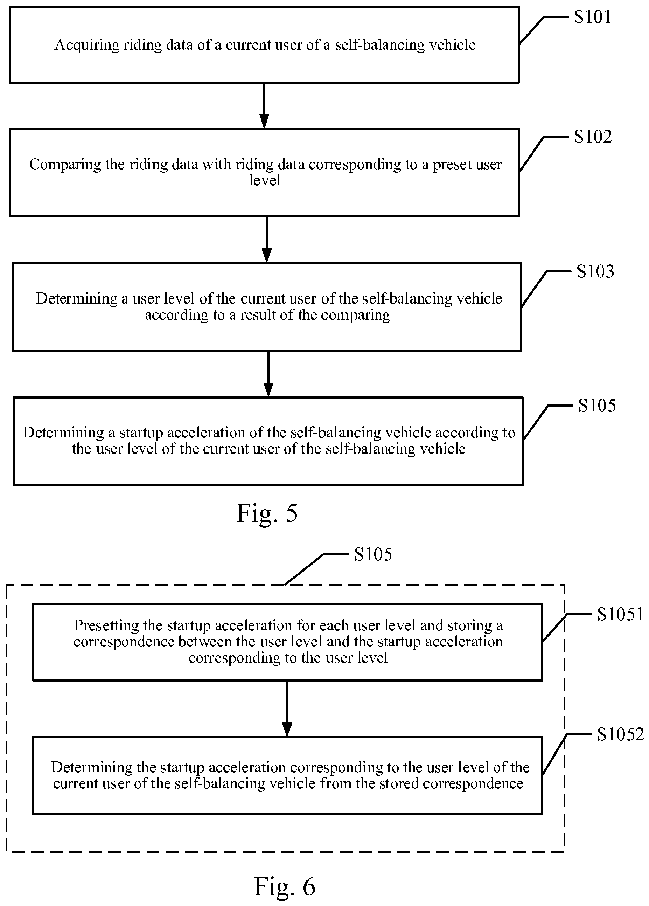

According to the invention, as illustrated in Fig. 6, the step S105 is implemented as the following steps S1051-S1052.

In step S1051, the startup acceleration of the self-balancing vehicle for each user level is preset and a correspondence between the user level and the startup acceleration corresponding to the user level is stored.

In step S1052, the startup acceleration corresponding to the user level of the current user of the self-balancing vehicle is determined from the stored correspondence.

The startup acceleration of the self-balancing vehicle is set according to the user level.

The correspondence between the user level and the startup acceleration of the self-balancing vehicle may be as follow.

The startup acceleration for a beginner is limited to 0-16KM/h>8s.

The startup acceleration for a primary user is limited to 0-16KM/h>7s.

The startup acceleration for an intermediate user is limited to 0-16KM/h>5s.

The startup acceleration for an advanced user is limited to 0-16KM/h>3s.

The above data may be set according to actual requirements.

In one embodiment, the above method includes steps S106-S107.

In step S106, it is determined whether the user level of the current user of the self-balancing vehicle has changed.

In step S107, if the user level is changed, current startup acceleration of the self-balancing vehicle is adjusted to be the startup acceleration corresponding to the changed user level.

Upon detection of user level change, e.g., the user becomes more proficient and changes his user level from the primary user to the intermediate user, the user level of the user of the self-balancing vehicle is adjusted and the startup acceleration of the self-balancing vehicle is correspondingly adjusted, thereby satisfying the user's requirement.

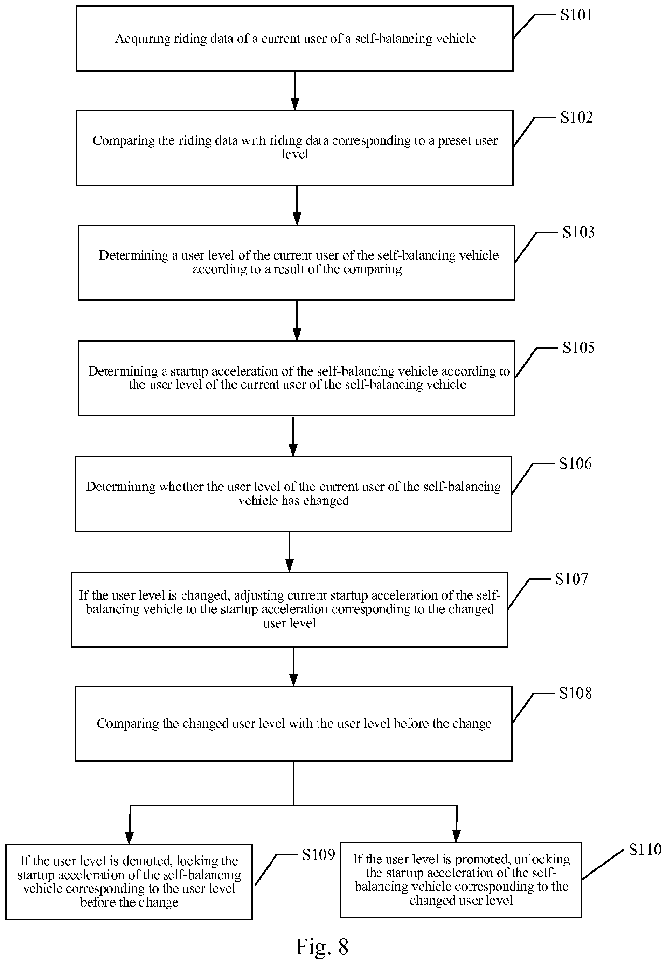

In one possible implementation, as illustrated in Fig. 8, the above method may further include steps S108-S110.

In step S108, the changed user level is compared with the user level before the change.

In step S109, if the user level is demoted, the startup acceleration of the self-balancing vehicle corresponding to the user level before the change is locked, and the locked startup acceleration is no longer allowed to be used.

In step S110, if the user level is promoted, the startup acceleration of the self-balancing vehicle corresponding to the changed user level is unlocked.

If the self-balancing vehicle detects the user level change in real time, the startup acceleration of the self-balancing vehicle is correspondingly unlocked or locked.

If it is detected that the user is promoted from the beginner to the primary user, the startup acceleration is automatically raised from the previous 1-16 km/h> 8s to 1-16 km/h>7s. If it is detected that the user is driving/riding the self-balancing vehicle with a decreased stability, the user level may be demoted in real time to keep the user safe. For example, the startup acceleration is lowered from the previous 1-16 km/h>7s to 1-16 km/h> 8s.

By judging the user level of the user (by judging according to the riding time, the riding distance, the shaking frequency, the shaking arc magnitude and the shaking time when the user is riding the vehicle), and upon detection of the change of the user level (demoting or promoting), the self-balancing vehicle automatically adjusts the startup acceleration of the corresponding level to ensure the user's deriving/riding safety.

The following are examples of devices which may be configured to perform the methods of the present invention.

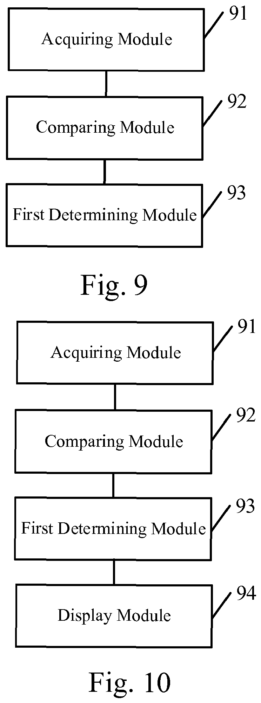

Fig. 9 is a block diagram of a device for safety driving according to an exemplary embodiment, and the device may be implemented as part or whole of an electrical apparatus by a software, a hardware or combination of the both. As illustrated in Fig. 9, the device for safety driving include the components as follow.

A acquiring module 91 is configured to acquire riding data of a current user of a self-balancing vehicle.

A comparing module 92 is configured to compare the riding data with riding data corresponding to a preset user level.

A first determining module 93 is configured to determining a user level of the current user of the self-balancing vehicle according to a result of the comparing.

The riding data includes the riding time or the riding distance.

The comparing module 92 may include the component as follow.

A first acquiring sub module is configured to acquire a riding time range or a riding distance range corresponding to the preset user level, respectively.

A first determining sub module is configured to determine the riding time range or the riding distance range in which the riding time or the riding distance of the current user of the self-balancing vehicle fall.

The first determining module 93 may include the component as follow.

A second determining sub module configured to determine the user level of the current user of the self-balancing vehicle according to the riding time range or the riding distance range in which the riding time or the riding distance of the current user of the self-balancing vehicle fall.

The riding data further includes the shaking frequency, the shaking arc magnitude and the shaking time.

The comparing module 92 may further include the component as follow.

A second acquiring sub module is configured to acquire a shaking frequency range, a shaking arc magnitude range, and a shaking time range corresponding to the preset user level, respectively.

A third determining sub module is configured to determine the shaking frequency range, the shaking arc magnitude range and the shaking time range in which the shaking frequency, the shaking arc magnitude and the shaking time of the current user of the self-balancing vehicle fall.

The first determining module 93 may further include the component as follow.

A fourth determining sub module is configured to determine the user level of the current user of the self-balancing vehicle according to the shaking frequency range, the shaking arc magnitude range and the shaking time range in which the current user of the self-balancing vehicle fall.

A second determining module is configured to determine the user level of the current user of the self-balancing vehicle as the user level determined according to the shaking frequency, the shaking arc magnitude and the shaking time of the current user of the self-balancing vehicle.

In one embodiment, as illustrated in Fig. 10, the device may further include the component as follow.

A display module 94 is configured to display the user level of the current user of the self-balancing vehicle.

The invention further includes:

A third determining module 95 is configured to determine a startup acceleration of the self-balancing vehicle according to the user level of the current user of the self-balancing comprising a storage sub module configured to preset the startup acceleration for each user level and store a correspondence between the user level and the startup acceleration corresponding to the user level; and
A fifth determining sub module is configured to determine the startup acceleration corresponding to the user level of the current user of the self-balancing vehicle from the stored correspondence.

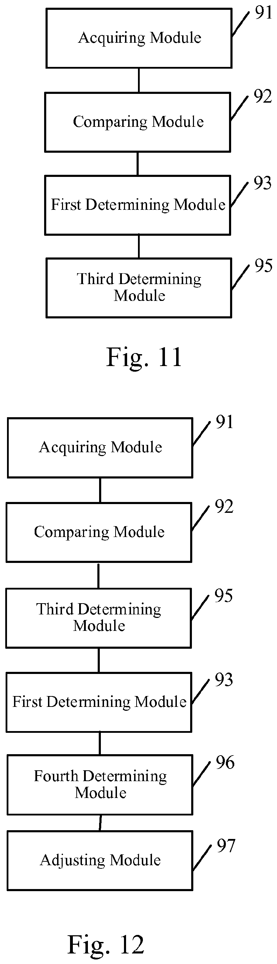

In one embodiment, as illustrated in Fig. 12, the device may further include the component as follow.

A fourth determining module 96 is configured to determine whether the user level of the current user of the self-balancing vehicle has changed; and
A adjusting module 97 is configured to adjust current startup acceleration of the self-balancing vehicle to the startup acceleration corresponding to the changed user level if the user level is changed.

A comparison module 98 is configured to compare the changed user level with the user level before the change;
A locking module 99 is configured to lock the startup acceleration of the self-balancing vehicle corresponding to the user level before the change if the user level is demoted; and
An unlocking module 100 is configured to unlock the startup acceleration of the self-balancing vehicle corresponding to the changed user level if the user level is promoted.

An unclaimed embodiment of the present invention further provides a device for safety driving, the device includes a processor and a memory for storing instructions executable by the processor.

The processor is configured to perform: acquiring riding data of a current user of a self-balancing vehicle; comparing the riding data with riding data corresponding to a preset user level; and determining a user level of the current user of the self-balancing vehicle according to a result of the comparing.

The above processor may be further configured to perform: the riding data may include one or more of the following data: a riding time, a riding distance, a shaking frequency, a shaking arc magnitude and a shaking time.

The above processor may be further configured to perform: the riding data includes the riding time or the riding distance, acquiring a riding time range or a riding distance range corresponding to the preset user level, respectively, determining the riding time range or the riding distance range in which the riding time or the riding distance of the current user of the self-balancing vehicle fall, and determining the user level of the current user of the self-balancing vehicle according to the riding time range or the riding distance range in which the riding time or the riding distance of the current user of the self-balancing vehicle fall.

The above processor may be further configured to perform: the riding data includes the shaking frequency, the shaking arc magnitude and the shaking time, acquiring a shaking frequency range, a shaking arc magnitude range, and a shaking time range corresponding to the preset user level, respectively, determining the shaking frequency range, the shaking arc magnitude range and the shaking time range in which the shaking frequency, the shaking arc magnitude and the shaking time of the current user of the self-balancing vehicle fall, and determining the user level of the current user of the self-balancing vehicle according to the shaking frequency range, the shaking arc magnitude range and the shaking time range in which the current user of the self-balancing vehicle fall.

The above processor may be further configured to perform: displaying the user level of the current user of the self-balancing vehicle.

The above processor may be further configured to perform: determining a startup acceleration of the self-balancing vehicle according to the user level of the current user of the self-balancing vehicle.

The above processor may be further configured to perform: presetting the startup acceleration for each user level and storing a correspondence between the user level and the startup acceleration corresponding to the user level; and determining the startup acceleration corresponding to the user level of the current user of the self-balancing vehicle from the stored correspondence.

The above processor may be further configured to perform: determining whether the user level of the current user of the self-balancing vehicle has changed; and if the user level is changed, adjusting current startup acceleration of the self-balancing vehicle to the startup acceleration corresponding to the changed user level.

The above processor may be further configured to perform: comparing the changed user level with the user level before the change; if the user level is demoted, locking the startup acceleration of the self-balancing vehicle corresponding to the user level before the change; and if the user level is promoted, unlocking the startup acceleration of the self-balancing vehicle corresponding to the changed user level.

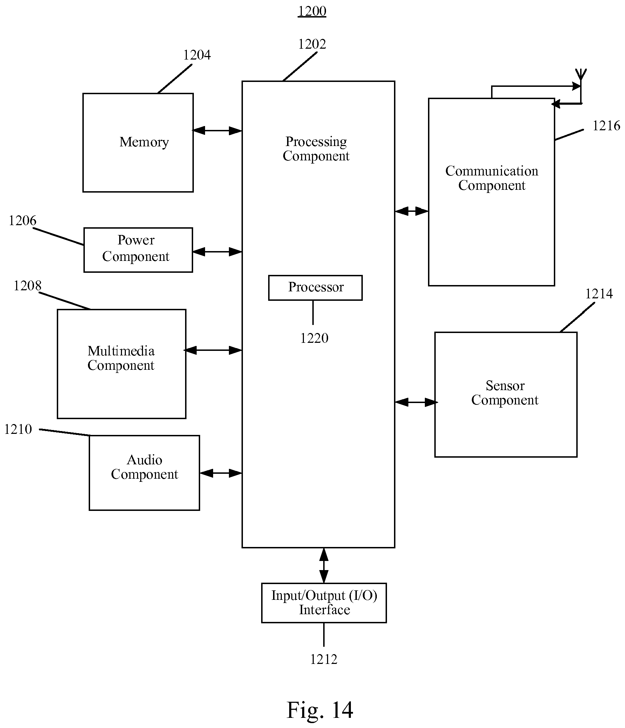

Fig. 14 is a block diagram of a device for safety driving which is applicable in a terminal apparatus. For example, the device 1200 may be a mobile phone, a computer, a digital broadcast terminal, a messaging device, a gaming console, a tablet, a medical device, exercise equipment, a personal digital assistant, and the like.

The device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In unclaimed embodiments, there is also provided a non-transitory computer-readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

**Claims**

1.  A method for safety driving, comprising:

    acquiring (S101) riding data of a current user of a self-balancing vehicle;
    comparing (S102) the riding data with riding data corresponding to a preset user level; and
    determining (S103) a user level of the current user of the self-balancing vehicle according to a result of the comparing;
    the riding data comprises one or more of the following data:

    a riding time, a riding distance, a shaking frequency, a shaking arc magnitude and a shaking time wherein,
    after determining the user level of the current user of the self-balancing vehicle according to the result of the comparing, the method further comprises:

    determining (S105) a startup acceleration of the self-balancing vehicle according to the user level of the current user of the self-balancing vehicle,
    setting the startup acceleration of the self-balancing vehicle according to the user level,
    wherein the determining (S105) a startup acceleration of the self-balancing vehicle according to the user level of the current user of the self-balancing vehicle comprises:

presetting (S1051) the startup acceleration of the self-balancing vehicle for each user level and storing a correspondence between the user level and the startup acceleration corresponding to the user level; and
determining (S1052) the startup acceleration corresponding to the user level of the current user of the self-balancing vehicle from the stored correspondence,

wherein the riding data comprises the shaking frequency, the shaking arc magnitude and the shaking time,
the comparing (S102) the riding data with riding data corresponding to a preset user level comprises:

acquiring (S1023) a shaking frequency range, a shaking arc magnitude range, and a shaking time range corresponding to the preset user level, respectively; and
determining (S1024) a shaking frequency range, a shaking arc magnitude range and a shaking time range in which the shaking frequency, the shaking arc magnitude and the shaking time of the current user of the self-balancing vehicle fall, and

the determining (S103) a user level of the current user of the self-balancing vehicle according to a result of the comparing comprises:
determining (S1025) the user level of the current user of the self-balancing vehicle according to the shaking frequency range, the shaking arc magnitude range and the shaking time range in which the current user of the self-balancing vehicle fall.

2. The method according to claim 1, wherein the riding data comprises the riding time or the riding distance, the comparing (S102) the riding data with riding data corresponding to a preset user level comprises:

acquiring (S1021) a riding time range or a riding distance range corresponding to the preset user level, respectively; and
determining (S1022) a riding time range or a riding distance range in which the riding time or the riding distance of the current user of the self-balancing vehicle fall, and
the determining (S103) a user level of the current user of the self-balancing vehicle according to a result of the comparing comprises:
determining (S1031) the user level of the current user of the self-balancing vehicle according to the riding time range or the riding distance range in which the riding time or the riding distance of the current user of the self-balancing vehicle fall.

3. The method according to one of claims 1 to 2, wherein the method further comprises:

determining (S106) whether the user level of the current user of the self-balancing vehicle has changed; and
in the case where the user level is changed, adjusting (S107) current startup acceleration of the self-balancing vehicle to be the startup acceleration corresponding to the changed user level;
comparing the changed user level with the user level before the change;
in the case where the user level is demoted, lowering the startup acceleration of the self-balancing vehicle corresponding to the user level before the change; and
in the case where the user level is promoted, raising the startup acceleration of the self-balancing vehicle corresponding to the changed user level..

4. A device for safety driving, comprising:

a acquiring module (91) configured to acquire riding data of a current user of a self-balancing vehicle;
a comparing module (92) configured to compare the riding data with riding data corresponding to a preset user level; and
a first determining module (93) configured to determining a user level of the current user of the self-balancing vehicle according to a result of the comparing;
the riding data comprises one or more of the following data:
a riding time, a riding distance, a shaking frequency, a shaking arc magnitude and a shaking time, the device further comprises:

a third determining module (95) configured to determine a startup acceleration of the self-balancing vehicle according to the user level of the current user of the self-balancing vehicle, wherein the third determining module (95) comprises:

a storage sub module configured to preset the startup acceleration of the self-balancing vehicle for each user level and store a correspondence between the user level and the startup acceleration corresponding to the user level; and

a fifth determining sub module configured to determine the startup acceleration corresponding to the user level of the current user of the self-balancing vehicle from the stored correspondence,

wherein the device is configured to set the startup acceleration of the self-balancing vehicle according to the user level, wherein the riding data comprises the shaking frequency, the shaking arc magnitude and the shaking time, the comparing module (92) comprises:

a second acquiring sub module configured to acquire a shaking frequency range, a shaking arc magnitude range, and a shaking time range corresponding to the preset user level, respectively; and

a third determining sub module configured to determine a shaking frequency range, a shaking arc magnitude range and a shaking time range in which the shaking frequency, the shaking arc magnitude and the shaking time of the current user of the self-balancing vehicle fall, and

the first determining module (93) comprises:

a fourth determining sub module configured to determine the user level of the current user of the self-balancing vehicle according to the shaking frequency range, the shaking arc magnitude range and the shaking time range in which the current user of the self-balancing vehicle fall.

5. The device according to claim 4, wherein the riding data comprises the riding time or the riding distance, the comparing module (92) comprises:

a first acquiring sub module configured to acquire a riding time range or a riding distance range corresponding to the preset user level, respectively; and

a first determining sub module configured to determine a riding time range or a riding distance range in which the riding time or the riding distance of the current user of the self-balancing vehicle fall, and

the first determining module (93) comprises:

a second determining sub module configured to determine the user level of the current user of the self-balancing vehicle according to the riding time range or the riding distance range in which the riding time or the riding distance of the current user of the self-balancing vehicle fall.

6. The device according to one of claims 4 to 5, wherein the device further comprises:

a fourth determining module (96) configured to determine whether the user level of the current user of the self-balancing vehicle has changed; and

a adjusting module (97) configured to adjust current startup acceleration of the self-balancing vehicle to be the startup acceleration corresponding to the changed user level in the case where the user level is changed;

a comparison module (98) configured to compare the changed user level with the user level before the change;

a locking module (99) configured to lower the startup acceleration of the self-balancing vehicle corresponding to the user level before the change in the case where the user level is demoted; and

an unlocking module (100) configured to raise the startup acceleration of the self-balancing vehicle corresponding to the changed user level in the case where the user level is promoted.

7. A computer program comprising instructions which, when the program is executed by a computer, cause the computer to carry out the method of any one of claims 1 to 3.

**Patentansprüche**

1. Verfahren zum sicheren Fahren, umfassend:

Erfassen (S101) von Fahrdaten eines aktuellen Benutzers eines selbstbalancierenden Fahrzeugs;

Vergleichen (S102) der Fahrdaten mit Fahrdaten, die einem voreingestellten Benutzerniveau entsprechen; und

Bestimmen (S103) eines Benutzerniveaus des aktuellen Benutzers des selbstbalancierenden Fahrzeugs gemäß einem Ergebnis des Vergleichens;

wobei die Fahrdaten eine oder mehrere der folgenden Daten umfassen:

eine Fahrzeit, eine Fahrstrecke, eine Schüttelfrequenz, eine Schüttelbogengröße und eine Schüttelzeit, wobei
nach dem Bestimmen des Benutzerniveaus des aktuellen Benutzers des selbstbalancierenden Fahrzeugs gemäß dem Ergebnis des Vergleichens, das Verfahren ferner umfasst:

> Bestimmen (S105) einer Anfahrbeschleunigung des selbstbalancierenden Fahrzeugs gemäß dem Benutzerniveau des aktuellen Benutzers des selbstbalancierenden Fahrzeugs, Einstellen der Anfahrbeschleunigung des selbstbalancierenden Fahrzeugs entsprechend des Benutzerniveaus, wobei das Bestimmen (S105) einer Anfahrbeschleunigung des selbstbalancierenden Fahrzeugs gemäß dem Benutzerniveau des aktuellen Benutzers des selbstbalancierenden Fahrzeugs folgendes umfasst:

> > Voreinstellen (S1051) der Anfahrbeschleunigung des selbstbalancierenden Fahrzeugs für jedes Benutzerniveau und Speichern einer Entsprechung zwischen dem Benutzerniveau und der dem Benutzerniveau entsprechenden Anfahrbeschleunigung; und Bestimmen (S1052) der dem Benutzerniveau des aktuellen Benutzers des selbstbalancierenden Fahrzeugs entsprechenden Anfahrbeschleunigung aus der gespeicherten Entsprechung,

wobei die Fahrdaten die Schüttelfrequenz, die Schüttelbogengröße und die Schüttelzeit umfassen,
wobei das Vergleichen (S102) der Fahrdaten mit Fahrdaten, die einem voreingestellten Benutzerniveau entsprechen, folgendes umfasst:

> Erfassen (S1023) eines Schüttelfrequenzbereichs, eines Schüttelbogengrößenbereichs und eines Schüttelzeitbereichs, die jeweils dem voreingestellten Benutzerniveau entsprechen; und Bestimmen (S1024) eines Schüttelfrequenzbereichs, eines Schüttelbogengrößenbereichs und eines Schüttelzeitbereichs, in den die Schüttelfrequenz, die Schüttelbogengröße und die Schüttelzeit des aktuellen Benutzers des selbstbalancierenden Fahrzeugs fallen, und

> wobei das Bestimmen (S103) eines Benutzerniveaus des aktuellen Benutzers des selbstbalancierenden Fahrzeugs gemäß einem Ergebnis des Vergleichens folgendes umfasst: Bestimmen (S1025) des Benutzerniveaus des aktuellen Benutzers des selbstbalancierenden Fahrzeugs gemäß dem Schüttelfrequenzbereich, dem Schüttelbogengrößenbereich und dem Schüttelzeitbereich, in den der aktuelle Benutzer des selbstbalancierenden Fahrzeugs fällt.

2. Verfahren nach Anspruch 1, wobei die Fahrdaten die Fahrzeit oder die Fahrstrecke umfassen, wobei das Vergleichen (S102) der Fahrdaten mit Fahrdaten, die einem voreingestellten Benutzerniveau entsprechen, folgendes umfasst:

> Erfassen (S1021) eines Fahrzeitbereichs oder eines Fahrstreckenbereichs entsprechend dem voreingestellten Benutzerniveau; und Bestimmen (S1022) eines Fahrzeitbereichs oder eines Fahrstreckenbereichs, in den die Fahrzeit oder die Fahrstrecke des aktuellen Benutzers des selbstbalancierenden Fahrzeugs fällt, und

> wobei das Bestimmen (S103) eines Benutzerniveaus des aktuellen Benutzers des selbstbalancierenden Fahrzeugs gemäß einem Ergebnis des Vergleichs folgendes umfasst: Bestimmen (S1031) des Benutzerniveaus des aktuellen Benutzers des selbstbalancierenden Fahrzeugs gemäß dem Fahrzeitbereich oder dem Fahrstreckenbereich, in den die Fahrzeit oder die Fahrstrecke des aktuellen Benutzers des selbstbalancierenden Fahrzeugs fallen.

3. Verfahren nach einem der Ansprüche 1 bis 2, wobei das Verfahren ferner umfasst:

> Bestimmen (S106), ob sich das Benutzerniveau des aktuellen Benutzers des selbstbalancierenden Fahrzeugs geändert hat; und in dem Fall, in dem sich das Benutzerniveau geändert hat, Anpassen (S107) der aktuellen Anfahrbeschleunigung des selbstbalancierenden Fahrzeugs, so dass sie der Anfahrbeschleunigung entspricht, die dem geänderten Benutzerniveau entspricht; Vergleichen des geänderten Benutzerniveaus mit dem Benutzerniveau vor der Änderung; in dem Fall, in dem das Benutzerniveau herabgestuft wird, Verringern der Anfahrbeschleunigung des selbstbalancierenden Fahrzeugs entsprechend dem Benutzerniveau vor der Änderung; und

in dem Fall, in dem das Benutzerniveau heraufgestuft wird, Erhöhen der Anfahrbeschleunigung des selbstbalancierenden Fahrzeugs entsprechend dem geänderten Benutzerniveau.

4. Vorrichtung zum sicheren Fahren, die folgendes aufweist:

ein Erfassungsmodul (91), das konfiguriert ist, um Fahrdaten eines aktuellen Benutzers eines selbstbalancierenden Fahrzeugs zu erfassen;
ein Vergleichsmodul (92), das konfiguriert ist, um die Fahrdaten mit Fahrdaten zu vergleichen, die einem voreingestellten Benutzerniveau entsprechen; und
ein erstes Bestimmungsmodul (93), das konfiguriert ist, um ein Benutzerniveau des aktuellen Benutzers des selbstbalancierenden Fahrzeugs gemäß einem Ergebnis des Vergleichs zu bestimmen;
wobei die Fahrdaten eine oder mehrere der folgenden Daten umfassen:
eine Fahrzeit, eine Fahrstrecke, eine Schüttelfrequenz, eine Schüttelbogengröße und eine Schüttelzeit, wobei die Vorrichtung ferner folgendes aufweist:

ein drittes Bestimmungsmodul (95), das so konfiguriert ist, dass es eine Anfahrbeschleunigung des selbstbalancierenden Fahrzeugs gemäß dem Benutzerniveau des aktuellen Benutzers des selbstbalancierenden Fahrzeugs bestimmt, wobei das dritte Bestimmungsmodul (95) umfasst:

ein Speicheruntermodul, das so konfiguriert ist, dass es die Anfahrbeschleunigung des selbstbalancierenden Fahrzeugs für jedes Benutzerniveau voreinstellt und eine Entsprechung zwischen dem Benutzerniveau und der den Benutzerniveau entsprechenden Anfahrbeschleunigung speichert; und
ein fünftes Bestimmungsuntermodul, das konfiguriert ist, um die Anfahrbeschleunigung, die dem Benutzerniveau des aktuellen Benutzers des selbstbalancierenden Fahrzeugs entspricht, aus der gespeicherten Entsprechung zu bestimmen,

wobei die Vorrichtung konfiguriert ist, die Anfahrbeschleunigung des selbstbalancierenden Fahrzeugs entsprechend dem Benutzerniveau einzustellen
wobei die Fahrdaten die Schüttelfrequenz, die Schüttelbogengröße und die Schüttelzeit umfassen,

wobei das Vergleichsmodul (92) folgendes aufweist:

ein zweites Erfassungsuntermodul, das konfiguriert ist, um einen Schüttelfrequenzbereich, einen Schüttelbogengrößenbereich und einen Schüttelzeitbereich zu erfassen, die jeweils dem voreingestellten Benutzerniveau entsprechen; und
ein drittes Bestimmungsuntermodul, das konfiguriert ist, um einen Schüttelfrequenzbereich, einen Schüttelbogengrößenbereich und einen Schüttelzeitbereich zu bestimmen, in den die Schüttelfrequenz, die Schüttelbogengröße und die Schüttelzeit des aktuellen Benutzers des selbstbalancierenden Fahrzeugs fallen, und

wobei das erste Bestimmungsmodul (93) folgendes aufweist:
ein viertes Bestimmungsuntermodul, das so konfiguriert ist, dass es das Benutzerniveau des aktuellen Benutzers des selbstbalancierenden Fahrzeugs gemäß dem Schüttelfrequenzbereich, dem Schüttelbogengrößenbereich und dem Schüttelzeitbereich, in den der aktuelle Benutzer des selbstbalancierenden Fahrzeugs fällt, bestimmt.

5. Vorrichtung nach Anspruch 4, wobei die Fahrdaten die Fahrzeit oder die Fahrstrecke umfassen,
wobei das Vergleichsmodul (92) folgendes aufweist:

ein erstes Erfassungsuntermodul, das so konfiguriert ist, dass es einen Fahrzeitbereich oder einen Fahrstreckenbereich erfasst, der jeweils dem voreingestellten Benutzerniveau entspricht; und
ein erstes Bestimmungsuntermodul, das konfiguriert ist, um einen Fahrzeitbereich oder einen Fahrstreckenbereich zu bestimmen, in den die Fahrzeit oder die Fahrstrecke des aktuellen Benutzers des selbstbalancierenden Fahrzeugs fällt, und
wobei das erste Bestimmungsmodul (93) folgendes aufweist:
ein zweites Bestimmungsuntermodul, das so konfiguriert ist, dass es die Benutzerebene des aktuellen Benutzers des selbstbalancierenden Fahrzeugs gemäß dem Fahrzeitbereich oder dem Fahrstreckenbereich bestimmt, in den die Fahrzeit oder die Fahrstrecke des aktuellen Benutzers des selbstbalancierenden Fahrzeugs fällt.

**6.** Vorrichtung nach einem der Ansprüche 4 bis 5, wobei die Vorrichtung ferner folgendes aufweist:

ein viertes Bestimmungsmodul (96), das konfiguriert ist, um zu bestimmen, ob sich das Benutzerniveau des aktuellen Benutzers des selbstbalancierenden Fahrzeugs geändert hat; und

ein Einstellmodul (97), das so konfiguriert ist, dass es die aktuelle Anfahrbeschleunigung des selbstbalancierenden Fahrzeugs so einstellt, dass sie die Anfahrbeschleunigung ist, die dem geänderten Benutzerniveau entspricht, wenn das Benutzerniveau geändert wird;

ein Vergleichsmodul (98), das konfiguriert ist, um das geänderte Benutzerniveau mit dem Benutzerniveau vor der Änderung zu vergleichen

ein Verriegelungsmodul (99), das so konfiguriert ist, dass es die Anfahrbeschleunigung des selbstbalancierenden Fahrzeugs entsprechend dem Benutzerniveau vor der Änderung in dem Fall verringert, in dem das Benutzerniveau herabgestuft wird; und

ein Entriegelungsmodul (100), das so konfiguriert ist, dass es die Anfahrbeschleunigung des selbstbalancierenden Fahrzeugs entsprechend dem geänderten Benutzerniveau in dem Fall erhöht, in dem das Benutzerniveau befördert wird.

**7.** Computerprogramm mit Anweisungen, die, wenn das Programm von einem Computer ausgeführt wird, den Computer veranlassen, das Verfahren nach einem der Ansprüche 1 bis 3 auszuführen.

**Revendications**

**1.** Procédé de conduite de sécurité, comportant les étapes consistant à :

acquérir (S101) des données de pilotage d'un utilisateur actuel d'un véhicule gyroscopique ;
comparer (S102) les données de pilotage avec des données de pilotage correspondant à un niveau d'utilisateur prédéfini ; et
déterminer (S103) un niveau d'utilisateur de l'utilisateur actuel du véhicule gyroscopique en fonction d'un résultat de la comparaison ;
les données de pilotage comportant une ou plusieurs des données suivantes :

un temps de pilotage, une distance de pilotage, une fréquence de balancement, une amplitude d'arc de balancement et un temps de balancement, dans lequel
après la détermination du niveau d'utilisateur de l'utilisateur actuel du véhicule gyroscopique en fonction du résultat de la comparaison, le procédé comporte en outre les étapes consistant à :

déterminer (S105) une accélération de démarrage du véhicule gyroscopique en fonction du niveau d'utilisateur de l'utilisateur actuel du véhicule gyroscopique,
définir l'accélération de démarrage du véhicule gyroscopique en fonction du niveau d'utilisateur,
dans lequel la détermination (S105) d'une accélération de démarrage du véhicule gyroscopique en fonction du niveau d'utilisateur de l'utilisateur actuel du véhicule gyroscopique comporte les étapes consistant à
prédéfinir (S1051) l'accélération de démarrage du véhicule gyroscopique pour chaque niveau d'utilisateur et stocker une correspondance entre le niveau d'utilisateur et l'accélération de démarrage correspondant au niveau d'utilisateur ; et
déterminer (S1052) l'accélération de démarrage correspondant au niveau d'utilisateur de l'utilisateur actuel du véhicule gyroscopique à partir de la correspondance stockée,

dans lequel les données de pilotage comportent la fréquence de balancement, l'amplitude d'arc de balancement et le temps de balancement,
la comparaison (S102) des données de pilotage avec des données de pilotage correspondant à un niveau d'utilisateur prédéfini comporte les étapes consistant à :

acquérir (S1023) une plage de fréquences de balancement, une plage d'amplitudes d'arc de balancement et une plage de temps de balancement correspondant au niveau d'utilisateur prédéfini, respectivement ; et
déterminer (S1024) une plage de fréquences de balancement, une plage d'amplitudes d'arc de balancement et une plage de temps de balancement, dans lesquelles la fréquence de balancement, l'amplitude de balancement et le temps de balancement de l'utilisateur actuel du véhicule gyroscopique se situent, et

la détermination (S103) d'un niveau d'utilisateur de l'utilisateur actuel du véhicule gyroscopique en fonction d'un résultat de la comparaison comporte l'étape consistant à :

déterminer (S1025) le niveau d'utilisateur de l'utilisateur actuel du véhicule gyroscopique en fonction de la plage de fréquences de balancement, de la plage d'amplitudes d'arc de balancement et de la plage de temps de balancement dans lesquelles l'utilisateur actuel du véhicule gyroscopique se situe.

2. Procédé selon la revendication 1, dans lequel les données de pilotage comportent le temps de pilotage ou la distance de pilotage,

la comparaison (S102) des données de pilotage avec des données de pilotage correspondant à un niveau d'utilisateur prédéfini comporte les étapes consistant à :

acquérir (S1021) une plage de temps de pilotage ou une plage de distances de pilotage correspondant au niveau d'utilisateur prédéfini, respectivement ; et

déterminer (S1022) une plage de temps de pilotage ou une plage de distances de pilotage dans laquelle le temps de pilotage ou la distance de pilotage de l'utilisateur actuel du véhicule gyroscopique se situe, et

la détermination (S103) d'un niveau d'utilisateur de l'utilisateur actuel du véhicule gyroscopique en fonction d'un résultat de la comparaison comporte l'étape consistant à :

déterminer (S1031) le niveau d'utilisateur de l'utilisateur actuel du véhicule gyroscopique en fonction de la plage de temps de pilotage ou de la plage de distances de pilotage dans laquelle le temps de pilotage ou la distance de pilotage de l'utilisateur actuel du véhicule gyroscopique se situe.

3. Procédé selon l'une des revendications 1 à 2, dans lequel le procédé comporte en outre les étapes consistant à :

déterminer (S106) si le niveau d'utilisateur de l'utilisateur actuel du véhicule gyroscopique a changé ; et

dans le cas où le niveau d'utilisateur a changé, régler (S107) l'accélération de démarrage actuelle du véhicule gyroscopique pour qu'elle soit l'accélération de démarrage correspondant au niveau d'utilisateur ayant changé ;

comparer le niveau d'utilisateur ayant changé au niveau d'utilisateur avant le changement ;

dans le cas où le niveau d'utilisateur est rétrogradé, réduire l'accélération de démarrage du véhicule gyroscopique correspondant au niveau d'utilisateur avant le changement ; et

dans le cas où le niveau d'utilisateur est rehaussé, augmenter l'accélération de démarrage du véhicule gyroscopique correspondant au niveau d'utilisateur ayant changé.

4. Dispositif de conduite de sécurité, comportant :

un module d'acquisition (91) configuré pour acquérir des données de pilotage d'un utilisateur actuel d'un véhicule gyroscopique ;

un module de comparaison (92) configuré pour comparer les données de pilotage avec des données de pilotage correspondant à un niveau d'utilisateur prédéfini ; et

un premier module de détermination (93) configuré pour déterminer un niveau d'utilisateur de l'utilisateur actuel du véhicule gyroscopique en fonction d'un résultat de la comparaison ;

les données de pilotage comportant une ou plusieurs des données suivantes :

un temps de pilotage, une distance de pilotage, une fréquence de balancement, une amplitude d'arc de balancement et un temps de balancement, le dispositif comportant en outre :

un troisième module de détermination (95) configuré pour déterminer une accélération de démarrage du véhicule gyroscopique en fonction du niveau d'utilisateur de l'utilisateur actuel du véhicule gyroscopique, dans lequel le troisième module de détermination (95) comporte :

un sous-module de stockage configuré pour prédéfinir l'accélération de démarrage du véhicule gyroscopique pour chaque niveau d'utilisateur et stocker une correspondance entre le niveau d'utilisateur et l'accélération de démarrage correspondant au niveau d'utilisateur ; et

un cinquième sous-module de détermination configuré pour déterminer l'accélération de démarrage correspondant au niveau d'utilisateur de l'utilisateur actuel du véhicule gyroscopique à partir de la correspondance stockée,

dans lequel le dispositif est configuré pour définir l'accélération de démarrage du véhicule gyroscopique en fonction du niveau d'utilisateur,

dans lequel les données de pilotage comportent la fréquence de balancement, l'amplitude d'arc de balancement et le temps de balancement,

le module de comparaison (92) comporte :

un deuxième sous-module d'acquisition configuré pour acquérir une plage de fréquences de balancement, une plage d'amplitudes d'arc de balancement et une plage de temps de balancement correspondant au niveau d'utilisateur prédéfini, respectivement ; et un troisième sous-module de détermination configuré pour déterminer une plage de fréquences de balancement, une plage d'amplitudes d'arc de balancement et une plage de temps de balancement dans lesquelles la fréquence de balancement, l'amplitude d'arc de balancement et le temps de balancement de l'utilisateur actuel du véhicule gyroscopique se situent, et

le premier module de détermination (93) comporte :

un quatrième sous-module de détermination configuré pour déterminer le niveau d'utilisateur de l'utilisateur actuel du véhicule gyroscopique en fonction de la plage de fréquences de balancement, de la plage d'amplitudes d'arc de balancement et de la plage de temps de balancement dans lesquelles l'utilisateur actuel du véhicule gyroscopique se situe.

5. Dispositif selon la revendication 4, dans lequel les données de pilotage comportent le temps de pilotage ou la distance de pilotage, le module de comparaison (92) comportant :

un premier sous-module d'acquisition configuré pour acquérir une plage de temps de pilotage ou une plage de distances de pilotage correspondant au niveau d'utilisateur prédéfini, respectivement ; et un premier sous-module de détermination configuré pour déterminer une plage de temps de pilotage ou une plage de distances de pilotage dans laquelle le temps de pilotage ou la distance de pilotage de l'utilisateur actuel du véhicule gyroscopique se situe, et le premier module de détermination (93) comportant :

un deuxième sous-module de détermination configuré pour déterminer le niveau d'utilisateur de l'utilisateur actuel du véhicule gyroscopique en fonction de la plage de temps de pilotage ou de la plage de distances de pilotage dans laquelle le temps de pilotage ou la distance de pilotage de l'utilisateur actuel du véhicule gyroscopique se situe.

6. Dispositif selon l'une des revendications 4 à 5, dans lequel le dispositif comporte en outre :

un quatrième module de détermination (96) configuré pour déterminer si le niveau d'utilisateur de l'utilisateur actuel du véhicule gyroscopique a changé ; et un module de réglage (97) configuré pour régler une accélération de démarrage actuelle du véhicule gyroscopique pour qu'elle soit l'accélération de démarrage correspondant au niveau d'utilisateur ayant changé dans le cas où le niveau d'utilisateur a changé ; un module de comparaison (98) configuré pour comparer le niveau d'utilisateur ayant changé au niveau d'utilisateur avant le changement ; un module de verrouillage (99) configuré pour réduire l'accélération de démarrage du véhicule gyroscopique correspondant au niveau d'utilisateur avant le changement dans le cas où le niveau d'utilisateur est rétrogradé; et un module de déverrouillage (100) configuré pour augmenter l'accélération de démarrage du véhicule gyroscopique correspondant au niveau d'utilisateur ayant changé dans le cas où le niveau d'utilisateur est rehaussé.

7. Programme informatique comportant des instructions qui, lorsque le programme est exécuté par un ordinateur, amènent l'ordinateur à mettre en œuvre le procédé selon l'une quelconque des revendications 1 à 3.

```
┌────────────────────────────────────────────────────────────────┐
│                                                                 │  ─── S101
│   Acquiring riding data of a current user of a self-balancing   │
│   vehicle                                                       │
│                                                                 │
└────────────────────────────────────────────────────────────────┘
                               │
                               ▼
┌────────────────────────────────────────────────────────────────┐
│                                                                 │  ─── S102
│   Comparing the riding data with riding data corresponding to   │
│   a preset user level                                           │
│                                                                 │
└────────────────────────────────────────────────────────────────┘
                               │
                               ▼
┌────────────────────────────────────────────────────────────────┐
│                                                                 │  ─── S103
│   Determining a user level of the current user of the self-     │
│   balancing vehicle according to a result of the comparing      │
│                                                                 │
└────────────────────────────────────────────────────────────────┘
```

Fig. 1

```
┌──────────────────────────────────────────────────────────────────┐        ┌─ S101
│                                                                    │ ╱──────┘
│        Acquiring riding data of a current user of a self-balancing vehicle │
│                                                                    │
└──────────────────────────────────────────────────────────────────┘
                                    │
                                    ▼
┌──────────────────────────────────────────────────────────────────┐        ┌─ S1021
│                                                                    │ ╱──────┘
│    Acquiring a riding time range or a riding distance range corresponding to the │
│                  preset user level, respectively                   │
│                                                                    │
└──────────────────────────────────────────────────────────────────┘
                                    │
                                    ▼
┌──────────────────────────────────────────────────────────────────┐        ┌─ S1022
│                                                                    │ ╱──────┘
│    Determining the riding time range or the riding distance range in which the │
│     riding time or the riding distance of the current user of the self-balancing │
│                            vehicle fall                            │
└──────────────────────────────────────────────────────────────────┘
                                    │
                                    ▼
┌──────────────────────────────────────────────────────────────────┐        ┌─ S1031
│                                                                    │ ╱──────┘
│    Determining the user level of the current user of the self-balancing vehicle │
│    according to the riding time range or the riding distance range in which the │
│      riding time or the riding distance of the current user of the self-balancing │
│                            vehicle fall                            │
└──────────────────────────────────────────────────────────────────┘
```

Fig. 2

Acquiring riding data of a current user of a self-balancing vehicle — S101

Acquiring a shaking frequency range, a shaking arc magnitude range, and a shaking time range corresponding to the preset user level, respectively — S1023

Determining the shaking frequency range, the shaking arc magnitude range and the shaking time range in which the shaking frequency, the shaking arc magnitude and the shaking time of the current user of the self-balancing vehicle fall — S1024

Determining the user level of the current user of the self-balancing vehicle according to the shaking frequency range, the shaking arc magnitude range and the shaking time range in which the current user of the self-balancing vehicle fall — S1032

Fig. 3

Acquiring riding data of a current user of a self-balancing vehicle — S101

Comparing the riding data with riding data corresponding to a preset user level — S102

Determining a user level of the current user of the self-balancing vehicle according to a result of the comparing — S103

Displaying the user level of the current user of the self-balancing vehicle — S104

Fig. 4

Acquiring riding data of a current user of a self-balancing vehicle — S101

Comparing the riding data with riding data corresponding to a preset user level — S102

Determining a user level of the current user of the self-balancing vehicle according to a result of the comparing — S103

Determining a startup acceleration of the self-balancing vehicle according to the user level of the current user of the self-balancing vehicle — S105

Fig. 5

S105

Presetting the startup acceleration for each user level and storing a correspondence between the user level and the startup acceleration corresponding to the user level — S1051

Determining the startup acceleration corresponding to the user level of the current user of the self-balancing vehicle from the stored correspondence — S1052

Fig. 6

Acquiring riding data of a current user of a self-balancing vehicle — S101

Comparing the riding data with riding data corresponding to a preset user level — S102

Determining a user level of the current user of the self-balancing vehicle according to a result of the comparing — S103

Determining a startup acceleration of the self-balancing vehicle according to the user level of the current user of the self-balancing vehicle — S105

Determining whether the user level of the current user of the self-balancing vehicle has changed — S106

If the user level is changed, adjusting current startup acceleration of the self-balancing vehicle to the startup acceleration corresponding to the changed user level — S107

Fig. 7

```
┌─────────────────────────────────────────────────────────────┐
│                                                             │ ╱── S101
│   Acquiring riding data of a current user of a self-balancing vehicle │
│                                                             │
└─────────────────────────────────────────────────────────────┘
                              │
                              ▼
┌─────────────────────────────────────────────────────────────┐
│                                                             │ ╱── S102
│   Comparing the riding data with riding data corresponding to a preset user │
│                           level                             │
└─────────────────────────────────────────────────────────────┘
                              │
                              ▼
┌─────────────────────────────────────────────────────────────┐
│                                                             │ ╱── S103
│   Determining a user level of the current user of the self-balancing vehicle │
│              according to a result of the comparing          │
└─────────────────────────────────────────────────────────────┘
                              │
                              ▼
┌─────────────────────────────────────────────────────────────┐
│                                                             │ ╱── S105
│   Determining a startup acceleration of the self-balancing vehicle according to │
│       the user level of the current user of the self-balancing vehicle │
└─────────────────────────────────────────────────────────────┘
                              │
                              ▼
┌─────────────────────────────────────────────────────────────┐
│                                                             │ ╱── S106
│   Determining whether the user level of the current user of the self-balancing │
│                       vehicle has changed                    │
└─────────────────────────────────────────────────────────────┘
                              │
                              ▼
┌─────────────────────────────────────────────────────────────┐
│                                                             │ ╱── S107
│   If the user level is changed, adjusting current startup acceleration of the self- │
│     balancing vehicle to the startup acceleration corresponding to the changed │
│                          user level                         │
└─────────────────────────────────────────────────────────────┘
                              │
                              ▼
┌─────────────────────────────────────────────────────────────┐
│                                                             │ ╱── S108
│   Comparing the changed user level with the user level before the change │
│                                                             │
└─────────────────────────────────────────────────────────────┘
                    │                         │
          ┌─────────┘                         └─────────┐
          ▼                                             ▼
┌──────────────────────────────┐          ┌──────────────────────────────┐
│ If the user level is demoted, locking the │ ╱─ S109 │ If the user level is promoted, unlocking │ ╱── S110
│ startup acceleration of the self-balancing │         │  the startup acceleration of the self-  │
│ vehicle corresponding to the user level  │         │ balancing vehicle corresponding to the │
│        before the change              │         │         changed user level            │
└──────────────────────────────┘          └──────────────────────────────┘
```

Fig. 8

```
┌─────────────────────────────┐
│      Acquiring Module       │ ╱ 91
└─────────────────────────────┘
              │
┌─────────────────────────────┐
│      Comparing Module       │ ╱ 92
└─────────────────────────────┘
              │
┌─────────────────────────────┐
│   First Determining Module  │ ╱ 93
└─────────────────────────────┘
```

## Fig. 9

```
┌─────────────────────────────┐
│      Acquiring Module       │ ╱ 91
└─────────────────────────────┘
              │
┌─────────────────────────────┐
│      Comparing Module       │ ╱ 92
└─────────────────────────────┘
              │
┌─────────────────────────────┐
│   First Determining Module  │ ╱ 93
└─────────────────────────────┘
              │
┌─────────────────────────────┐
│       Display Module        │ ╱ 94
└─────────────────────────────┘
```

## Fig. 10

Acquiring Module / 91

Comparing Module / 92

First Determining Module / 93

Third Determining Module / 95

Fig. 11

Acquiring Module / 91

Comparing Module / 92

Third Determining Module / 95

First Determining Module / 93

Fourth Determining Module / 96

Adjusting Module / 97

Fig. 12

Fig. 13

1200

1204

1202

Memory

Processing
Component

Communication
Component

1216

1206

Power
Component

Processor

1220

1208

Multimedia
Component

1214

Sensor
Component

1210

Audio
Component

Input/Output (I/O)
Interface

1212

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104503671 A

- US 2014326525 A1

**Non-patent literature cited in the description**

- **AUTHENTECH ; BEN SCHMANKE.** *Ninebot Moni, Self Balancing Hands-free Segway, "Hoverboard 2.0!" REVIEW*